# EUROPÄISCHE PATENTSCHRIFT

(11) **EP 0 780 412 B1**
(45) Veröffentlichungstag und Bekanntmachung des Hinweises auf die Patenterteilung: **06.05.1999**
(21) Anmeldenummer: 96119757.1
(22) Anmeldetag: 10.12.1996
(51) Int. Cl.: C08F 297/04, D01F 6/94, D01F 6/56

(54) **A-B-C-Blockcopolymere mit einem hohen Elastomerenanteil**
A-B-C Block copolymers with a high elastomer content
Copolymères blocs A-B-C à part élastomère élevée

(30) Priorität: 18.12.1995 DE 19547044
(43) Veröffentlichungstag der Anmeldung: 25.06.1997
(73) Patentinhaber: BASF Aktiengesellschaft, 67063 Ludwigshafen (DE)
(72) Erfinder: Gottschalk, Axel, Dr., 67435 Neustadt (DE); Knoll, Konrad, Dr., 67069 Ludwigshafen (DE); Stadler, Raimund, Prof. Dr., 55278 Mommenheim (DE); Brinkmann, Susanne, 55270 Ober-Olm (DE)

(56) Entgegenhaltungen:
- EP-A- 0 261 069
- EP-A- 0 587 261
- DE-A- 1 911 241
- US-A- 5 272 211
- JOURNAL OF POLYMER SCIENCE, PART B, Bd. 8, Nr. 7, 1970, Seiten 499-503, XP002026769 W. TREPKA: "synthesis and properties of block polymers of 1,1-diphenylethylene/styrene and butadiene"

## Beschreibung

Die vorliegende Erfindung betrifft A-B-C-Blockcopolymere, die
A) 5 bis 25 Gew.-% eines Polymeren, im wesentlichen aufgebaut aus vinylaromatischen Monomeren,
B) 50 bis 90 Gew.-% eines Polymeren mit einer Glasübergangstemperatur von weniger als + 20°C und
C) 5 bis 25 Gew.-% eines Copolymerisates aus einem 1,1-Diarylethen der allgemeinen Formel I 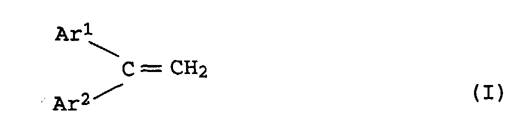 worin Ar¹ und Ar² unabhängig voneinander für einen C₆- bis C₁₈-aromatischen Rest steht, der mit einem oder mehreren C₁-bis C₂₂-Alkyl, C₁- bis C₂₂-Alkoxy oder Halogenresten substituiert sein kann
   und einem vinylaromatischen Monomeren der allgemeinen Formel II 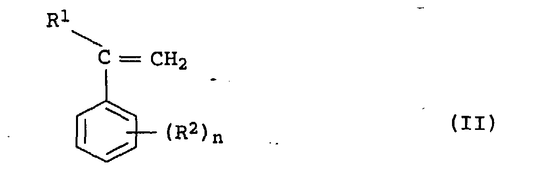 worin R¹ und R² H oder C₁- bis C₄-Alkyl bedeuten und n eine ganze Zahl von Null bis 3 darstellt,
   wobei das molare Verhältnis der Monomeren I und II im Bereich von 1 : 1 bis 1 : 10 liegt,
   wobei Polymere aus den Blockkomponenten A, B und C nicht miteinander mischbar sind, enthalten. Ferner betrifft die vorliegende Erfindung die Verwendung dieser Blockcopolymeren zur Herstellung von Formkörpern, Folien oder Fasern sowie die Formkörper, Folien oder Fasern, die aus den Blockcopolymeren erhältlich sind.

Blockcopolymere, die drei unterschiedliche miteinander unverträgliche Blöcke enthalten, wurden in der DE-A-42 40 445 als Phasenvermittler für Polymermischungen offenbart. Bevorzugte Blockcopolymere enthalten 10 bis 85, insbesondere 30 bis 60 Gew.-% eines aus vinylaromatischen Polymeren aufgebauten Blockes A, 5 bis 80, insbesondere 5 bis 40 Gew.-% eines elastischen-Blockes B und 10 bis 85, insbesondere 25 bis 60 Gew.-% eines Blockes C, der bevorzugt aus Alkylestern der Acryl- oder der Methacrylsäure aufgebaut ist.

Darüber hinaus sind in der DE-P-19 521 779.9 Dreiblockcopolymere beschrieben, die aufgrund der speziellen räumlichen Verhältnisse der drei untereinander unverträglichen Blöcke besondere Morphologien aufweisen. Der Anteil des elastomeren Blockes B in den dort beschriebenen Dreiblockcopolymeren beträgt nicht mehr als 30 Gew.-%.

Für viele Anwendungen, z.B. im Bekleidungs- oder Sportsektor, sind Kunststoffe erforderlich, die sich gut dehnen lassen und gleichzeitig hohe Reißfestigkeiten zeigen.

Aufgabe der vorliegenden Erfindung war es, A-B-C-Dreiblockcopolymere zur Verfügung zu stellen, die hart sind, sich durch besonders gute Reißfestigkeiten und gute Dehnbarkeiten ausweisen und sich durch hohe Abriebfestigkeiten auszeichnen.

Diese Aufgabe wird von den eingangs definierten Blockcopolymeren erfüllt.

Die erfindungsgemäßen Blockcopolymere enthalten drei unterschiedliche Blöcke A, B und C, die miteinander unverträglich sind.

Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der makromolekularen Chemie, Band IV, S. 222 ff, E. Vollmert-Verlag 1979).

Zwei Polymere sind umso besser verträglich, je geringer die Differenz ihrer Löslichkeitsparameter ist. Derartige Parameter sowie die Mischungsenthalpie sind nicht einheitlich für alle Polymeren bestimmbar, so daß die Löslichkeit nur indirekt, z.B. durch Torsions-Schwingungs- oder DTA-Messungen bestimmbar ist, da bei Copolymeren die für die Einzelkomponenten charakteristischen Stufen entfallen.

Von einem mischbaren, d.h. verträglichen System aus zwei oder mehreren Polymeren kann zumindest dann ausgegangen werden, wenn dieses zumindest eines der folgenden Kriterien erfüllt:

### - optische Klarheit

Ein Film aus miteinander verträglichen Polymeren erscheint optisch klar, sind diese aber unverträglich, so erscheint der Film optisch trübe. Im Zweifelsfall kann eine elektronenmikroskopische Untersuchung den Grad der Klarheit ermitteln.

### - Glastemperatur:

Miteinander mischbare, d.h. verträgliche Polymere zeigen bei thermischen Belastungen (DTA- oder DSC-Messungen) nur eine Glastemperatur, die zwischen denen der Ausgangspolymeren liegt. Bei teilverträglichen Polymeren können zwei verschiedene Glastemperaturen nachgewiesen werden, die sich aber aufeinander zubewegen.

### - Kernspinresonanz-(NMR)-Relaxation:

Eine sehr empfindliche Methode ist die Bestimmung der Polymermischbarkeit durch NMR-Relaxationszeitmessungen. Im Falle nicht mischbarer Polymere werden die Spin-Spin- bzw. Spin-Gitter-Relaxationszeiten der reinen Polymere gemessen, im Falle mischbarer Polymere treten andere Relaxationszeiten auf.

### - sonstige Methoden:

Andere anwendbare Verfahren, die zur Bestimmung der Mischbarkeit von Polymeren herangezogen werden können, sind Trübungsmessungen, Streumethoden (Lichtstreuung), IR-Spektroskopie und Fluoreszenztechniken (L.A. Utracki "Polymer Alloys and Blends", S. 34 - 42, New York 1989).

Beispiele für miteinander mischbare Polymere sind in verschiedenen Monographien (z.B. J. Brandrup, E.H. Immergut: Polymer Handbook, 3rd Edition, 1989) ausführlich dokumentiert.

Erfindungsgemäß enthalten die Blockcopolymere von 5 bis 25 Gew.-%, bezogen auf die Blöcke A bis C, eines Blockes A. Bevorzugt beträgt der Anteil des Blockes A an den erfindungsgemäßen Blockcopolymeren von 5 bis 20, insbesondere von 5 bis 15 Gew.-%, bezogen auf die Blöcke A bis C. Beispielsweise kann der Anteil von 5 bis 9 Gew.-%, bezogen auf die Blöcke A bis C betragen.

Der Block A besteht aus einem Polymeren, das im wesentlichen aus vinylaromatischen Monomeren (a) aufgebaut ist. Als vinylaromatische Monomere kommen vorallem solche der allgemeinen Formel III 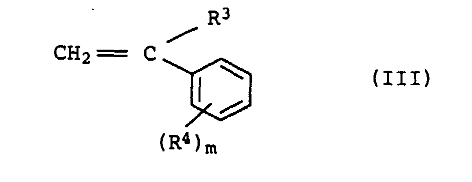 in Betracht. Darin bedeuten R³ und R⁴ unabhängig voneinander ein Wasserstoffatom, Halogenatom oder eine C₁- bis C₈-Alkylgruppe. Die Variable m steht für eine ganze Zahl von 1 bis 3. Als Beispiele seien Styrol, p-Chlorstyrol, ∝-Methylstyrol, p-Methylstyrol, Vinyltoluol und p-t-Butylstyrol genannt. Das Polymer A kann auch aus einer Mischung unterschiedlicher Monomerer a aufgebaut sein. Vorzugsweise wird jedoch Styrol allein verwendet. Das mittlere Molekulargewicht (Zahlenmittelwert) des Blockes A ist im allgemeinen unkritisch. In der Regel liegt es im Bereich von 2000 bis 100 000, bevorzugt im Bereich von 5000 bis 50 000 g/mol.

Der Anteil des Blockes B an den erfindungsgemäßen Block-copolymeren beträgt von 50 bis 90, bevorzugt von 60 bis 90 Gew.-%, bezogen auf die Blöcke A bis C. Besonders bevorzugte Blockcopolymere enthalten von 70 bis 90 Gew.-%, z.B. von 82 bis 90 Gew.-% des Blockes B.

Gemäß der Erfindung besteht der Block B aus einem Polymeren B mit einer Glasübergangstemperatur von weniger als +20 °C. Bevorzugte Polymere B weisen Glasübergangstemperaturen von weniger als 0°C, insbesondere weniger als -20°C auf.

Zum Aufbau der Polymeren B können prinzipiell alle olefinisch ungesättigten Monomeren (b) eingesetzt werden.

Bevorzugt werden konjugierte Diene als Monomere b verwendet. Darunter werden solche mit 4 bis 16 C-Atomen bevorzugt. Besonders bevorzugte konjugierte Diene enthalten 4 bis 8 C-Atome. Es kommen sowohl lineare als auch cyclische konjugierte Diene in Betracht. Diese können als Substituenten Alkylgruppen, bevorzugt C₁ bis C₃-Alkylgruppen, insbesondere Methyl, enthalten.

Als Beispiele seien 1,3-Butadien, 1,3-Pentadien, 2-Methylbuta-1,3-dien, 2,3-Dimethylbuta-1,3-dien und konjugierte Hexadiene, bevorzugt 1,3-Hexadien genannt. Ganz besonders bevorzugt wird 1,3-Butadien oder 2-Methylbuta-1,3-dien als Monomer b verwendet. Es können auch Mischungen unterschiedlicher Monomerer b zum Aufbau des Blockes B verwendet werden, wobei das Mischungsverhältnis beliebig ist.

Zu den bevorzugten Blockcopolymeren zählen diejenigen mit hydrierten Blöcken B, worunter solche mit hydriertem Poly-1,3-butadien als Block B besonders bevorzugt werden. Im allgemeinen sind in den hydrierten Polymeren B die Hälfte bis alle der ursprünglich vorhandenen aliphatischen ungesättigten Bindungen abgesättigt, d.h. der Hydriergrad beträgt 50 bis 100 %, bevorzugt 70 bis 100 %. Besonders bevorzugt liegt der Hydriergrad im Bereich von 90 bis 100 %.

Das mittlere Molekulargewicht des Blockes B ist in weiten Bereichen unkritisch. Im allgemeinen wird das mittlere Molekulargewicht des Blockes B entsprechend der gewünschten Eigenschaften des Blockcopolymerisates gewählt. In der Regel liegt das mittlere Molekulargewicht (Zahlenmittelwert Mₙ) des Blockes B im Bereich von 10 000 bis 200 000, bevorzugt von 20 000 bis 150 000 g/mol.

Neben den Blöcken A und B enthalten die Blockcopolymeren erfindungsgemäß von 5 bis 25 Gew.-%, bezogen auf die Blöcke A bis C, eines Blockes C. Bevorzugte erfindungsgemäße Blockcopolymere enthalten von 5 bis 20, insbesondere von 5 bis 15 Gew.-% des Blockes C. Die erfindungsgemäßen Blockcopolymere können beispielsweise von 5 bis 9 Gew.-%, bezogen auf die Blöcke A bis C, des Blockes C enthalten.

Der Block C ist erfindungsgemäß aus einem Polymeren C aufgebaut, das von den, die Blöcke A und B aufbauenden, Polymeren verschieden ist.

Die erfindungsgemäßen Blockcopolymere enthalten als Block C ein Copolymerisat aus einem 1,1-Diarylethen der allgemeinen Formel I 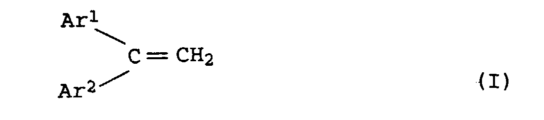 und einem vinylaromatischen Monomeren der allgemeinen Formel II

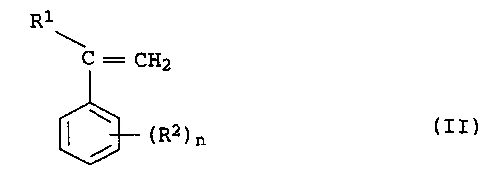

In der Formel I stehen Ar¹ und Ar² unabhängig voneinander für einen C₆- bis C₁₈-aromatischen Rest. Dieser kann sowohl unsubstiuiert sein als auch einen oder mehrere Substituenten tragen. Als Substituenten kommen Alkylreste mit einem bis zu 22 C-Atomen, bevorzugt C₁- bis C₈-Alkyl, wie Methyl, Ethyl, n-Propyl, i-Propyl, n-Butyl, i-Butyl, t-Butyl oder n-Hexyl in Betracht. Desweiteren zählen C₁- bis C₂₂-Alkoxyreste zu den geeigneten Substitutenten. Beispielhaft seien C₁- bis C₈-Alkoxyreste, wie Methoxy, Ethoxy, n-Propoxy, i-Propoxy, n-Butoxy, i-Butoxy, t-Butoxy oder n-Hexoxy genannt. Ferner können Halogenatome, bevorzugt Chlor, Substituenten sein. Besonderes bevorzugt sind Ar¹ und Ar² gleich, ganz besonders bevorzugt sind Ar¹ und Ar² Phenyl.

Die Monomeren der allgemeinen Formel-II sind Styrol und dessen in α-Stellung oder am aromatischen Ring mit Alkylgruppen mit 1 bis 4 C-Atomen substituierte Derivate. Der aromatische Ring kann 0 bis 3 Alkylgruppen aufweisen. Unsubstituiertes Styrol wird besonders bevorzugt eingesetzt.

Das molare Verhältnis der Einheiten, die sich von Monomeren I ableiten zu Einheiten, die sich von Monomeren II ableiten liegt im allgemeinen im Bereich von 1 : 1 bis 1 : 10, vorzugsweise von 1 : 1,05 bis 1 : 8 und besonders bevorzugt im Bereich von 1 : 1,1 bis 1 : 6. Da die Monomeren der Formel I in der Regel für sich allein nicht polymerisieren, sind Produkte mit molaren Verhältnissen von mehr als 1 : 1 nicht auf einfachem Wege zugänglich. Wesentlich niedrigere Verhältnisse als 1 : 10 sind im allgemeinen nicht sinnvoll, da dann die Blöcke A und C miteinander verträglich werden können.

Die Herstellung der erfindungsgemäßen Blockcopolymeren kann nach allgemein bekannten Methoden erfolgen, beispielsweise durch sequentielle anionische Polymerisation (US-A 3 251 905, US-A 3 390 207, US-A 3 598 887, US-A 4 219 627).

Sind nicht alle drei Blöcke in der gewünschten Reihenfolge anionisch polymerisierbar, so kann die Verfahrensweise dahingehend abgeändert werden, daß man nur zwei oder eines der Monomere polymerisiert und mit anderen Methoden weiterverfährt, z.B. indem man radikalisch oder aber auch kationisch weiterpolymerisiert. Die Übergangsmöglichkeiten von anionischer Polymerisation auf andere Wachstumsmechanismen sind beispielsweise beschrieben in: P. Rempp, E. Franta, J.E. Herz, Advances in Polymer Science 1988, S. 164 - 168.

Das anionische Polymerisationsverfahren kann auch so durchgeführt werden, daß das oder die lebenden Enden des zuerst hergestellten Blockes vor der Umsetzung mit den Monomeren des weiteren Blockes mit 1,1-Diarylethen, bevorzugt 1,1-Diphenylethen oder mit 1,1-Diarylethen und einer vinylaromatischen Verbindung, bevorzugt Styrol, verkappt wird, wie in der DE-P-195 42 643.6 beschrieben.

Auch Monomere, die nur polykondensierbar sind, können in ein solches Dreiblockcopolymeres eingebracht werden, indem beispielsweise ein mit einer funktionellen Endgruppe versehenes, durch anionische Polymerisation hergestelltes Zweiblockcopolymeres bei der Polykondensation zugegeben wird (R.N. Young, R.P. Quirk, L.J. Fetters, Advances in Polymer Science, Vol. 56, S. 70, 1984).

Weiterhin können die erfindungsgemäßen Blockcopolymere noch durch radikalische Polymerisation mit Hilfe von funktionellen Initiatoren oder Makroinitiatoren hergestellt werden (G. Riess, G. Hurtrez, P. Bahadur "Encyclopedia of Polymer Science and Engineering", Vol. 2, 327 - 330, Wiley & Sons [1985]).

Die Hydrierung der Blockcopolymeren wird bevorzugt mit molekularem Wasserstoff und Katalysatoren auf Basis von Metallen oder Metallsalzen der achten Gruppe des Periodensystems durchgeführt. Sie kann in heterogener Phase, z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind oder homogen durch in situ erzeugte Diimine aus z.B. Tosylhydrazid erfolgen. Verfahren zur selektiven Hydrierung von Blockcopolymeren werden u.a. in den US-Patentschriften 3 113 986 und 4 226 952 beschrieben.

Um Blöcke C aus 1,1-Diarylethen und vinylaromatischen Monomeren herzustellen, werden in der Regel Monomere der Formel I, vorgelegt und die Monomeren der Formel II während der Reaktion nach einem Gradientenverfahren derart zudosiert, daß mit zunehmender Reaktionsdauer die zugegebene Menge an Monomeren der Formel I pro Zeiteinheit im wesentlichen entsprechend der noch vorhandenen Menge an Monomeren der Formel II verringert wird. Durch diese Art der Umsetzung wird das Monomerverhältnis während der gesamten Polymerisation annähernd konstant gehalten. Zur Steuerung des Zulaufgradienten kann vorteilhafterweise die Änderung des Brechungsindexes, der eine Funktion des Monomerverhältnisses ist, ausgenutzt werden. Eine weitere Möglichkeit besteht darin, in einer Reihe von Vorversuchen das Monomerverhältnis als Funktion des Umsatzes zu bestimmen und so eine entsprechende Eichkurve zu erhalten. Die Monomeren I und II können aber auch gleichzeitig zugegeben werden. Je nach Verhältnis von I zu II erhält man einen mehr oder weniger stark ausgepragten Konzentrationsgradienten.

Die Umsetzung der genannten Monomeren erfolgt vorteilhafterweise in einem inerten Lösungsmittel, beispielsweise Cyclohexan, Methylcyclohexan, Benzol, Toluol, Ethylbenzol oder Xylol. Es können aber auch Kohlenwasserstoffe verwendet werden, in denen das im Verlauf der Reaktion entstehende Copolymere nicht löslich ist. In diesem Fall kann man anstelle der Lösungspolymerisation eine Fällungspolymerisation oder unter Verwendung eines Dispergierhilfsmittels eine Dispersionspolymerisation durchführen. Als Reaktionsmedium für derartige Verfahrensvarianten eignen sich beispielsweise Butan, Pentan, n-Hexan, Isopentan, Heptan, Oktan und Isooktan.

Die Polymerisation wird im allgemeinen mittels metallorganischer Verbindungen initiiert. Bevorzugt werden Verbindungen der Alkalimetalle, insbesondere des Lithiums. Beispiele für Initiatoren sind Methyllithium, Ethyllithium, Propyllithium, n-Butyllithium, s-Butyllithium und t-Butyllithium. Die Dosierung richtet sich nach dem angestrebten Molekulargewicht des Blockcopolymeren C, liegt aber in der Regel im Bereich von 0,001 bis 5 Mol-%, wenn man sie auf alle Monomeren bezieht.

Zur Erzielung höherer Polymerisationsgeschwindigkeiten können geringe Mengen polarer, aprotischer Lösungsmittel zugesetzt werden. Geeignet sind beispielsweise Diethylether, Diisopropylether, Diethylenglykoldimethylether, Diethylenglykol-dibutylether oder insbesondere Tetrahydrofuran. Das polare Cosolvens wird dem unpolaren Lösungsmittel bei dieser Verfahrensvariante in der Regel in einer geringen Menge von ca. 0,5 - 5 Vol-% zugesetzt.

Die Polymerisationstemperatur kann zwischen -80^{o} und 130°C, bevorzugt 0°C bis 90°C, liegen.

Die erfindungsgemäßen Blockcopolymere zeichnen sich dadurch aus, daß die elastomeren Blöcke B die Matrix bilden, in der die Blöcke A und C dipergiert vorliegen. Dadurch, daß die Blöcke A und C miteinander unverträglich sind, verschlaufen sie nicht bzw. nur unwesentlich miteinander sondern nehmen getrennte Räume innerhalb der Matrix ein. Die erfindungsgemäßen Blockcopolymere sind hervorragend reißfest und lassen sich gut dehnen. Sie eignen sich zum Herstellen von Formkörpern, Folien oder Fasern.

### Beispiele

### Synthese der Blockcopolymere:

### Beispiel 1

Vor der Durchführung der Polymerisation wurde die Reinheit des Lösungsmittels (Cyclohexan, 3,5 l) überprüft. Hierzu wurden bei Raumtemperatur eine kleine Menge Styrol vorgelegt und mit einer 1,2 molaren Lösung von s-Butyllithium in Hexan bis zur ersten Gelbfärbung, die das Entstehen des Styrylanions indiziert, titriert und darauf geachtet, daß die Gelbfärbung eine halbe Stunde stabil war.

Die Styrolmenge (52 g, 0,5 mol) wurde zugegeben und nach Zugabe der Initiatormenge (4 ml einer 1,65 molaren s-Butyllithium-Lösung in Hexan) wurde das Styrol 1 Stunde bei 60°C polymerisiert. Danach wurden 324 g Butadien (6 Mol) zugegeben. Bei einem Stickstoffüberdruck von 1 bar wurde 2 Stunden bei 60°C polymerisiert.

Anschließend wurde in den Reaktor eine Mischung aus 27 g (0,25 mol) Styrol und 45 g (0,25 mol) 1,1-Diphenylethen gegeben und eine weitere Stunde polymerisiert. Anschließend wurde die Reaktion durch die Zugabe von Isopropanol beendet.

Das Polymere wurde in Methanol ausgefällt, abfiltriert und bei 50°C im Vakuum getrocknet. Es wurden 435 g farbloses Pulver erhalten.

Die Charakterisierung des PS-b-PB-b-P(S-co-DPE)-Blockcopolymeren erfolgte durch GPC jeweils nach der Polymerisation eines Blockes (gegen Polystyrol-Eichung) und 1 H-NMR-Spektroskopie und FT-IR-Spektroskopie. Die Zusammensetzung (Gew.-%) betrug: 11% Styrol (Block 1), 72% Butadien (Block 2), 6% Styrol und 11% 1,1-Diphenylethen (Block 3). Das Gesamtmolekulargewicht lag bei M_{P} = 91 000 (Peakmaximum), die Polydispersität bei 1,22.

### Beispiel 2

Vor der Durchführung der Polymerisation wurde die Reinheit des Lösungsmittels (Cyclohexan, 3,51) wie unter Beispiel 1 beschrieben überprüft.

Die Styrolmenge ( 78 g, 0,75 mol) wurde zugegeben und nach Zugabe der Initiatormenge (6 ml einer 1,65 molaren s-Butyllithium-Lösung in Hexan) wurde das Styrol 1 Stunde bei 60°C polymerisiert.

Danach wurden 324 g Butadien (6 Mol) zugegeben. Bei einem Stickstoffüberdruck von 1 bar wurde 2 Stunden bei 60°C polymerisiert.

Anschließend wurde in den Reaktor eine Mischung aus 42 g (0,4 mol) Styrol und 18 g (0,1 mol) 1,1-Diphenylethen gegeben und eine weitere Stunde polymerisiert. Anschließend wurde die Reaktion durch die Zugabe von Isopropanol beendet.

Das Polymere wurde in Methanol ausgefällt, abfiltriert und bei 50°C im Vakuum getrocknet. Es wurden 430 g farbloses Pulver erhalten.

Die Charakterisierung des PS-b-PB-b-P(S-co-DPE)-Blockcopolymeren erfolgte durch GPC jeweils nach der Polymerisation eines Blockes (gegen Polystyrol-Eichung) und 1H-NMR-Spektroskopie und FT-IR-Spektroskopie. Die Zusammensetzung (Gew.-%) betrug: 14% Styrol (Block 1), 72% Butadien (Block 2), 10% Styrol und 4% 1,1-Diphenylethen (Block 3). Das Gesamtmolekulargewicht lag bei Mp = 74 000 (Peakmaximum), die Polydispersität bei 1,15.

### Beispiel 3

Vor der Durchführung der Polymerisation wurde die Reinheit des Lösungsmittels (Cyclohexan, 3,51) wie unter Beispiel 1 beschrieben überprüft.

Die Styrolmenge (27 g, 0,25 mol) wurde zugegeben und nach Zugabe der Initiatormenge (4 ml einer 1,65 molaren s-Butyllithium-Lösung in Hexan) wurde das Styrol 1 Stunde bei 60°C polymerisiert.

Danach wurden 324 g Butadien (6 Mol) zugegeben. Bei einem Stickstoffüberdruck von 1 bar wurde 2 Stunden bei 60°C polymerisiert. Anschließend wurde eine Mischung aus 21 g (0,2 mol) Styrol und 18 g (0,1 mol) 1,1-Diphenylethen zugegeben und eine weitere Stunde bei 60°C polymerisiert. Anschließend wurde die Reaktion durch die Zugabe von Isopropanol beendet.

Das Polymere wurde in Methanol ausgefällt, abfiltriert und bei 50°C im Vakuum getrocknet. Es wurden 380 g farbloses Pulver erhalten.

Die Charakterisierung des PS-b-PB-b-P(S-co-DPE) -Blockcopolymeren erfolgte durch GPC jeweils nach der Polymerisation eines Blockes (gegen Polystyrol-Eichung) und lH-NMR-Spektroskopie und FT-IR-Spektroskopie. Die Zusammensetzung (Gew.-%) betrug: 7% Styrol (Block 1), 82% Butadien (Block 2), 6% Styrol und 5% 1,1-Diphenylethen (Block 3). Das Gesamtmolekulargewicht lag bei M_{P} = 85 000 (Peakmaximum), die Polydispersität bei 1,20.

### Vergleichsbeispiel V1

Beispiel 1 wurde wiederholt, nur wurde die Menge an Diphenylethen durch Styrol ersetzt.

Es wurden 420 g farbloses Pulver erhalten.

Die Charakterisierung des PS-b-PB-b-PS-Triblockcopolymeren erfolgte durch GPC jeweils nach der Polymerisation eines Blockes (gegen Polystyrol-Eichung) und lH-NMR-Spektroskopie. Die Zusammensetzung (Gew.-%) betrug: 11% Styrol (Block 1), 72% Butadien (Block 2), 17% Styrol (Block 3). Das Gesamtmolekulargewicht lag bei M_{P} = 93 000 (Peakmaximum), die Polydispersität bei 1,19.

### Vergleichsbeispiel V2

Beispiel 1 wurde wiederholt, jedoch wurde im ersten Block anstelle von Styrol eine Mischung aus 27 g (0,25 mol) Styrol und 45 g (0,25 mol) 1,1-Diphenylethen eingesetzt.

Es wurden 460 g farbloses Pulver erhalten.

Die Charakterisierung des P(S-co-SDPE)-b-PB-b-P(S-co-DPE)-Blockcopolymeren erfolgte durch GPC jeweils nach der Polymerisation eines Blockes (gegen Polystyrol-Eichung) und lH-NMR-Spektroskopie sowie FT-IR-Spektroskopie. Die Gesamtzusammensetzung (Gew.-%) betrug: 11% Styrol, 70% Butadien, 19% 1,1-Diphenylethen. Das Gesamtmolekulargewicht lag bei M_{P} = 98 000 (Peakmaximum), die Polydispersität bei 1,33.

### Beispiel 4

Vor der Durchführung der Polymerisation wurde die Reinheit des Lösungsmittels (Cyclohexan, 3,5l) wie unter Beispiel 1 beschrieben überprüft.

Die Styrolmenge (72 g, 0,7 mol) wurde zugegeben und nach Zugabe der Initiatormenge (5 ml einer 1,65 molaren s-Butyllithium-Lösung in Hexan) wurde das Styrol 1 Stunde bei 60°C polymerisiert.

Danach wurden 324 g Butadien (6 Mol) zugegeben. Bei einem Stickstoffüberdruck von 1 bar wurde 2 Stunden bei 60°C polymerisiert.

Anschließend wurde eine Mischung aus 32 g (0,3 mol) Styrol und 40 g (0,22 mol) 1,1-Diphenylethen zugegeben und eine weitere Stunde bei 60°C polymerisiert. Danach wurde Isopropanol zugesetzt und die Polymerisation beendet.

Das Gesamtmolekulargewicht (GPC gegen Polystyrol-Eichung) lag bei Mₚ = 88 000 (Peakmaximum), die Polydispersität bei 1,17.

Die selektive Hydrierung (der Butadien-Einheiten) des Block-copolymeren erfolgte in Gegenwart einer Katalysatorlösung aus 1,4 g Nickel(II)acetylacetonat in 80 ml Toluol, versetzt mit 30 ml einer 20 gew.-%igen Lösung von Triisobutylaluminium in Hexan bei einem Wasserstoffdruck von 15 bar bei 80°C. Die fortschreitende Hydrierung konnte dabei über den Druckabfall im Autoklaven beobachtet werden.

Die Aufarbeitung erfolgte durch Fällung des Polymeren in Ethanol.

Der Anteil des hydrierten Elastomerblocks betrug 70 %. Der Hydriergrad betrug 99 %.

### Vergleichsbeispiel 3

Zum Vergleich wurde ein hydriertes SBS-Dreiblockcopolymer mit einem Elastomergehalt von ebenfalls ca. 70 % herangezogen (z.B. Kraton G 1652 von der Firma Shell).

Von den Materialien wurden jeweils 3 mm dicke Filme aus Lösung hergestellt und daraus die Normprüfkörper herausgestanzt. An den Materialien wurde ein Zugversuch gemäß DIN 53 455 durchgeführt. Die mechanischen Eigenschften der Filme ist der Tabelle zu entnehmen.

**Tabelle**

| Beispiel Nr. | Reißdehnung[%] | Reißfestigkeit[N/mm²] |
|---|---|---|
| 1 | 850 | 49 |
| Vergleichsbeispiel 1 | 850 | 28 |
| Vergleichsbeispiel 2 | 800 | 26 |
| 2 | 800 | 51 |
| 3 | 850 | 42 |
| 4 | 530 | 51 |
| Vergleichsbeispiel 3 | 540 | 30 |

## Patentansprüche

1. A-B-C-Blockcopolymere, enthaltend
A) 5 bis 25 Gew.-% eines Polymeren, im wesentlichen aufgebaut aus vinylaromatischen Monomeren,
B) 50 bis 90 Gew.-% eines Polymeren mit einer Glasübergangstemperatur von weniger als + 20°C und
C) 5 bis 25 Gew.-% eines Copolymerisates aus einem 1,1-Diarylethen der allgemeinen Formel I 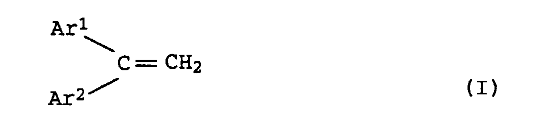 worin Ar¹ und Ar² unabhängig voneinander für einen C₆-bis C₁₈-aromatischen Rest steht, der mit einem oder mehreren C₁- bis C₂₂-Alkyl, C₁- bis C₂₂-Alkoxy oder Halogenresten substituiert sein kann, und einem vinylaromatischen Monomeren der allgemeinen Formel II 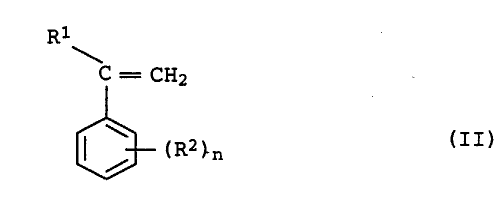 worin R¹ und R² H oder C₁- bis C₄-Alkyl bedeuten und n eine ganze Zahl von Null bis 3 darstellt,
wobei das molare Verhältnis der Monomeren I und II im Bereich von 1 : 1 bis 1 : 10 liegt,
wobei polymere aus den Blockkomponenten A, B und C nicht mit-einander mischbar sind.

2. Blockcopolymere nach Anspruch 1, enthaltend
5 bis 15 Gew.-% des Blockes A,
70 bis 90 Gew.-% des Blockes B und
5 bis 15 Gew.-% des Blockes C.

3. Blockcopolymere nach Anspruch 1 oder 2, enthaltend als Block B Poly-1,3-butadien oder Polyisopren.

4. Blockcopolymere nach einem der Ansprüche 1 bis 3, enthaltend als Block B ein hydriertes Poly-1,3-butadien oder Polyisopren.

5. Blockcopolymere nach einem der Ansprüche 1 bis 4, enthaltend als Block C ein Copolymerisat aus Styrol und 1,1-Diphenylethen.

6. Verwendung der Blockcopolymeren, gemäß einem der Ansprüche 1 bis 5 zur Herstellung von Formkörpern, Folien oder Fasern.

7. Formkörper, Folien oder Fasern, erhältlich aus den Blockcopolymeren, gemäß einem der Ansprüche 1 bis 5.

## Claims

1. An A-B-C block copolymer containing
A) from 5 to 25% by weight of a polymer essentially composed of vinylaromatic monomers,
B) from 50 to 90% by weight of a polymer having a glass transition temperature of less than +20°C and
C) from 5 to 25% by weight of a copolymer of a 1,1-diarylethene of the formula I 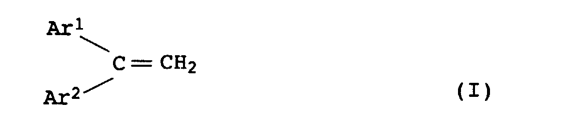 where Ar¹ and Ar², independently of one another, are each an aromatic C₆-C₁₈ radical which may be substituted by one or more C₁-C₂₂-alkyl, C₁-C₂₂-alkoxy or halogen radicals,
and a vinylaromatic monomer of the formula II 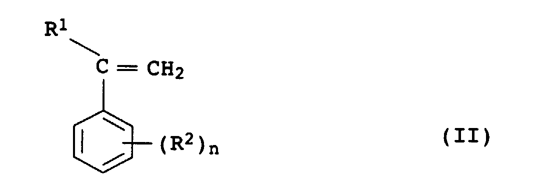 where R¹ and R² are each H or C₁-C₄-alkyl and n is an integer from zero to 3,
where the molar ratio of the monomers I and II is from 1:1 to 1:10, and
where polymers of the block components A, B and C are not miscible with one another.

2. A block copolymer as claimed in claim 1, containing
from 5 to 15% by weight of the block A,
from 70 to 90% by weight of the block B and
from 5 to 15% by weight of the block C.

3. A block copolymer as claimed in claim 1 or 2, containing poly-1,3-butadiene or polyisoprene as block B.

4. A block copolymer as claimed in any of claims 1 to 3, containing a hydrogenated poly-1,3-butadiene or polyisoprene as block B.

5. A block copolymer as claimed in any of claims 1 to 4, containing a copolymer of styrene and 1,1-diphenylethene as block C.

6. The use of a block copolymer as claimed in any of claims 1 to 5 for the production of moldings, films or fibers.

7. A molding, film or fiber obtainable from a block copolymer as claimed in any of claims 1 to 5.

## Revendications

1. Copolymères blocs A-B-C contenant
A) 5 à 25% en poids d'un polymère, essentiellement constitué de monomères vinylaromatiques,
B) 50 à 90% en poids d'un polymère présentant une température de transition vitreuse inférieure à +20°C, et
C) 5 à 25% en poids d'un copolymère d'un 1,1-diaryléthène de la formule générale I : 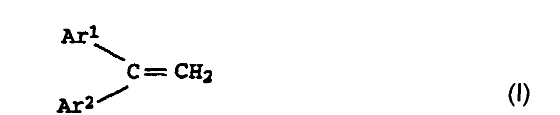 dans laquelle Ar¹ et Ar² représentent indépendamment l'un de l'autre un radical aromatique en C₆ à C₁₈, qui peut être substitué par un ou plusieurs radicaux alkyle en C₁ à C₂₂, alcoxy en C₁ à C₂₂ ou halogène,
et d'un monomère vinylaromatique de la formule générale II : 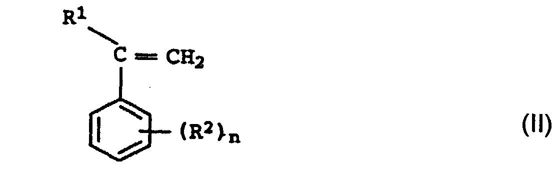 dans laquelle R¹ et R² représentent H ou un alkyle en C₁ à C₄ et n représente un nombre entier de zéro à 3,
le rapport molaire entre les monomères I et II étant de l'ordre 1/1 à 1/10,
les polymères à base des composants blocs A, B et C n'étant pas miscibles entre eux.

2. Copolymères blocs suivant la revendication 1, contenant
5 à 15% en poids du bloc A,
70 à 90% en poids du bloc B et
5 à 15% en poids du bloc C.

3. Copolymères blocs suivant l'une des revendications 1 et 2, contenant, comme bloc B, du poly-1,3-butadiène ou du polyisoprène.

4. Copolymères blocs suivant l'une des revendications 1 à 3, contenant, comme bloc B, un polyisopréne ou poly-1,3-butadiène hydrogéné.

5. Copolymères blocs suivant l'une des revendications 1 à 4, contenant, comme bloc C, un copolymère de styrène et de 1,1-diphényléthène.

6. Utilisation des copolymères blocs suivant l'une des revendications 1 à 5, pour la fabrication de corps de moulage, de feuilles ou de fibres.

7. Corps de moulage, feuilles ou fibres, que l'on peut obtenir à partir des copolymères blocs suivant l'une des revendications 1 à 5.
